# EUROPEAN PATENT APPLICATION

(11) **EP 4 810 303 A1**
(43) Date of publication of application: **23.09.2026**
(21) Application number: 25175198.8
(22) Date of filing: 08.05.2025
(51) Int. Cl.: B60L 53/16, B60L 53/18

(54) **ELECTRIC VEHICLE CHARGING CABLE APPARATUS, SYSTEM, AND METHOD**

(30) Priority: 21.03.2025 GB 202504187
(71) Applicant: F.W. Thorpe Public Limited Company, Redditch Worcestershire B98 9HH (GB)
(72) Inventor: THORPE, Max, Redditch, B98 9HH (GB)
(74) Representative: Swindell & Pearson Limited

(57) **Abstract**

An electric vehicle charging cable apparatus comprising an electric vehicle charging handle with a cable inlet. The electric vehicle charging cable apparatus further comprises a cable. The cable comprises an elongate conductive core with one or more conductive wires configured to transmit electrical power. The cable further comprises an elongate insulating jacket. The insulating jacket is disposed around the conductive core along at least the majority of the length of the conductive core. The insulating jacket comprises an electrically insulative material. The cable further comprises an elongate sleeve, wherein the sleeve is disposed around the insulating jacket along at least the majority of the length of the insulating jacket. The sleeve comprises a plurality of openings. The cable further comprises an impermeable cover disposed around the sleeve along a portion of the length of the sleeve, the impermeable cover extending through the cable inlet.

## Description

### TECHNOLOGICAL FIELD

Examples of the disclosure relate to an electric vehicle charging cable. Some relate to an electric vehicle charging cable for improving safety.

### BACKGROUND

Electric vehicle charging cables connected to an electric vehicle charging station represent a safety hazard for pedestrians or other road users. The cable may obstruct an adjacent parking bay, or the cable can present a trip hazard to cyclists or pedestrians using an adjacent walkway. The cables can also be slippery when wet.

In addition, the electric vehicle charging cables operate at high voltages. Damage to the cables or water ingress can therefore introduce a significant danger of electrocution.

### BRIEF SUMMARY

According to various, but not necessarily all, examples there is provided an electric vehicle charging cable apparatus, the cable apparatus comprising: an electric vehicle charging handle comprising a cable inlet; and a cable, the cable comprising: an elongate conductive core comprising one or more conductive wires configured to transmit electrical power; an elongate insulating jacket, wherein the insulating jacket is disposed around the conductive core along at least the majority of the length of the conductive core, the insulating jacket comprising an electrically insulative material; an elongate sleeve, wherein the sleeve is disposed around the insulating jacket along at least the majority of the length of the insulating jacket, the sleeve comprising a plurality of openings; and an impermeable cover, wherein the impermeable cover is disposed around the sleeve along a portion of the length of the sleeve, the impermeable cover extending through the cable inlet.

The impermeable cover may be disposed around the sleeve along less than half of the length of the sleeve. The impermeable cover may be substantially tubular. The impermeable cover may be up to 20 cm in length. The impermeable cover may comprise a heat-shrink material. The heat-shrink material may comprise a polyolefin material.

The sleeve may comprise a braided material. The sleeve may comprise a meshed material. The plurality of openings may comprise a plurality of through holes through the material of the sleeve. The insulating jacket may be of a first colour and the sleeve may be of a second colour, the second colour being different to the first colour.

The sleeve may comprise a material configured to emit visible light in response to absorbing UV light. The sleeve may comprise a fluorescent material.

The sleeve may comprise a fibrous material. The sleeve may comprise a fibrous polymeric material. The fibrous polymeric material may comprise polyester.

According to various, but not necessarily all, examples there is provided an electric vehicle charging cable apparatus, the cable apparatus comprising: an electric vehicle charging handle comprising a cable inlet; and a cable, the cable comprising: an elongate conductive core comprising one or more conductive wires configured to transmit electrical power; an elongate insulating jacket, wherein the insulating jacket is disposed around the conductive core along at least the majority of the length of the conductive core, the insulating jacket comprising an electrically insulative material; and an elongate sleeve, wherein the sleeve is disposed around the insulating jacket along at least the majority of the length of the insulating jacket, the sleeve comprising a plurality of openings.

The electric vehicle charging cable apparatus may further comprise an impermeable cover, wherein the impermeable cover is disposed around the sleeve along a portion of the length of the sleeve, the impermeable cover extending through the cable inlet.

The impermeable cover may be disposed around the sleeve along less than half of the length of the sleeve. The impermeable cover may be substantially tubular. The impermeable cover may be up to 20 cm in length. The impermeable cover may comprise a heat-shrink material. The heat-shrink material may comprise a polyolefin material.

The sleeve may comprise a braided material. The sleeve may comprise a meshed material. The plurality of openings may comprise a plurality of through holes through the material of the sleeve. The insulating jacket may be of a first colour and the sleeve may be of a second colour, the second colour being different to the first colour.

The sleeve may comprise a material configured to emit visible light in response to absorbing UV light. The sleeve may comprise a fluorescent material.

The sleeve may comprise a fibrous material. The sleeve may comprise a fibrous polymeric material. The fibrous polymeric material may comprise polyester.

According to various, but not necessarily all, examples there is provided an electric vehicle charging system comprising: the electric vehicle charging cable apparatus of any of the preceding paragraphs; and an electric vehicle charging station comprising a charging outlet, the charging outlet being configured to couple to the electric vehicle charging cable apparatus.

The electric vehicle charging system may further comprise one or more ultraviolet (UV) light sources configured to illuminate the electric vehicle charging cable apparatus. The one or more UV light sources may comprise a UV light emitting diode (LED) and/or a UV lamp. The one or more UV light sources may be configured to emit a sequence of UV light pulses.

According to various, but not necessarily all, examples there is provided a method of producing an electric vehicle charging cable apparatus, the method comprising: drawing an elongate sleeve over an elongate insulating jacket of a cable such that the sleeve is disposed around the insulating jacket along at least the majority of the length of the insulating jacket, the insulating jacket being disposed around a conductive core of the cable along at least the majority of the length of the conductive core, wherein the sleeve comprises a plurality of openings along its length and wherein the insulating jacket comprises an electrically insulative material; locating an impermeable cover over a portion of the length of the sleeve, the impermeable cover comprising a heat-shrink material; reducing the size of the impermeable cover such that the impermeable cover covers the sleeve along the portion of the length of the sleeve; and locating an end of the cable comprising the impermeable cover into a cable inlet of an electric vehicle charging handle.

The impermeable cover may comprise a heat-shrink material, and the reducing the size of the impermeable cover may comprise heating the impermeable cover.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or instructions as desired, and as appropriate. The description of a function should additionally be considered to also disclose any means suitable for performing that function

### BRIEF DESCRIPTION

Some examples will now be described with reference to the accompanying drawings in which:
Fig. 1 shows a perspective view of example electric vehicle charging cable apparatus;
Fig. 2 shows a top down view of the example electric vehicle charging cable apparatus of Fig. 1;
Fig. 3 shows a magnified view of the example electric vehicle charging cable apparatus of Figs. 1 & 2;
Fig. 4 shows a cross-sectional view at a first point along the length of the example electric vehicle charging cable apparatus of Figs. 1 & 2;
Fig. 5 shows a cross-sectional view at a second point along the length of the example electric vehicle charging cable apparatus of Figs. 1 & 2;
Fig. 6 shows a side view of the example electric vehicle charging cable apparatus of Figs. 1 & 2, with the electric vehicle charging handle being shown in cross-section;
Fig. 7 shows a magnified side view of the example electric vehicle charging cable apparatus of Figs. 1 & 2; and
Fig. 8 shows an example electric vehicle charging station, an example electric vehicle charging cable apparatus, and an electric vehicle.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

The figures illustrate an electric vehicle charging cable apparatus 100. The electric vehicle charging cable apparatus 100 comprises an electric vehicle charging handle 110 comprising a cable inlet 112. The cable 150 comprises an elongate conductive core 152 comprising one or more conductive wires configured to transmit electrical power. The cable 150 further comprises an elongate insulating jacket 154, the insulating jacket 154 being disposed around the conductive core 152 along at least the majority of the length of the conductive core 152, the insulating jacket 154 comprising an electrically insulative material. The cable 150 further comprises an elongate sleeve 156, the sleeve 156 being disposed around the insulating jacket 154 along at least the majority of the length of the insulating jacket 154. The sleeve 156 comprises a plurality of openings along its length. The cable 150 further comprises an impermeable cover 158 disposed around the sleeve 156 along a portion of the length of the sleeve 156, the impermeable cover 158 extending through the cable inlet 112.

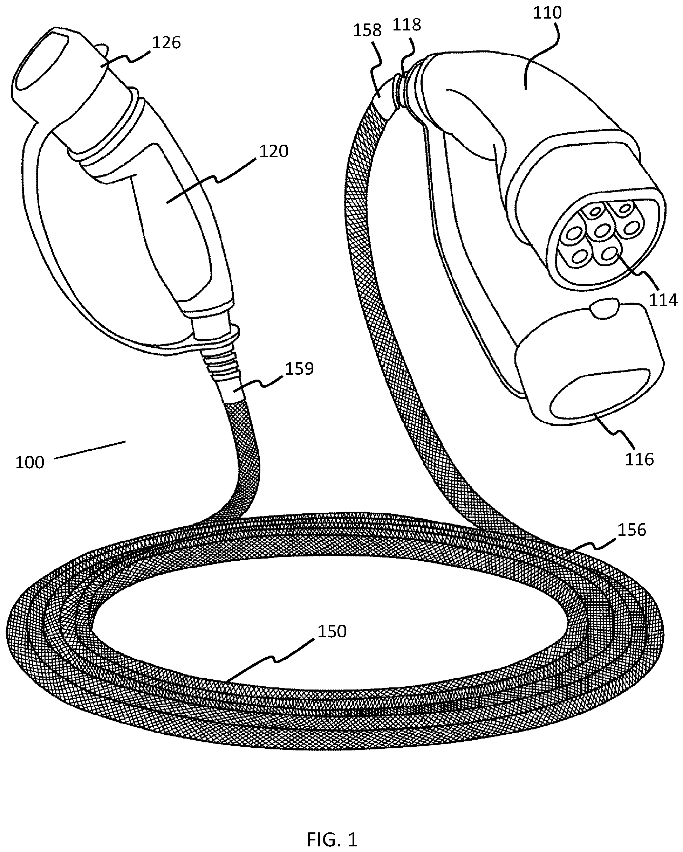

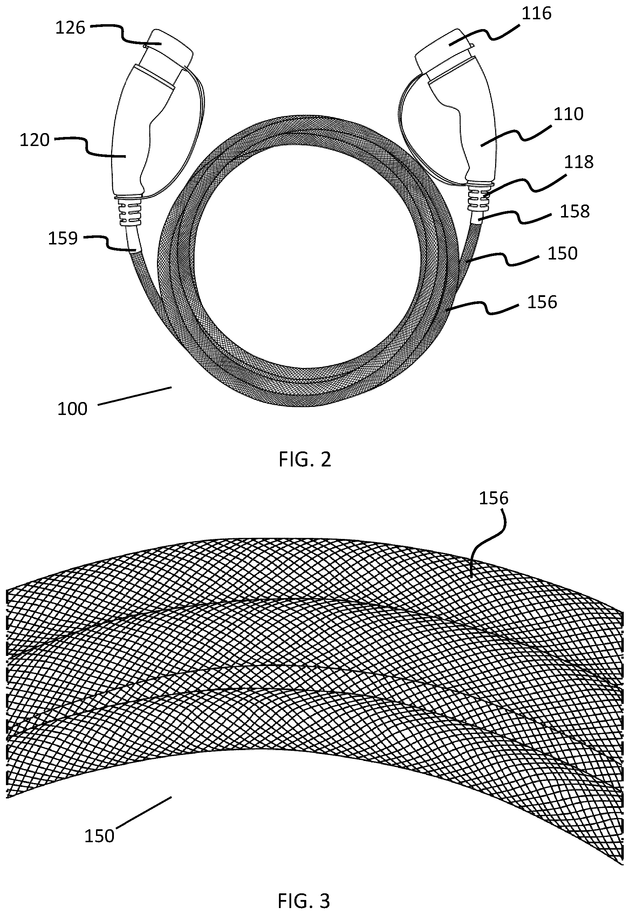

Figs. 1 & 2 show an example electric vehicle charging cable apparatus 100. The example electric vehicle charging cable apparatus 100 includes an electric vehicle charging handle 110, a cable 150, and a plug 120. The cable 150 is elongate and flexible. A first end of the cable 150 is coupled to the electric vehicle charging handle 110, and a second end is coupled to the plug 120. The electric vehicle charging handle 110 could also be referred to as a vehicle-side connector and the plug 120 could also be referred to as a charging-station-side connector. The cable 150 could also be referred to as a power cable or a power cord.

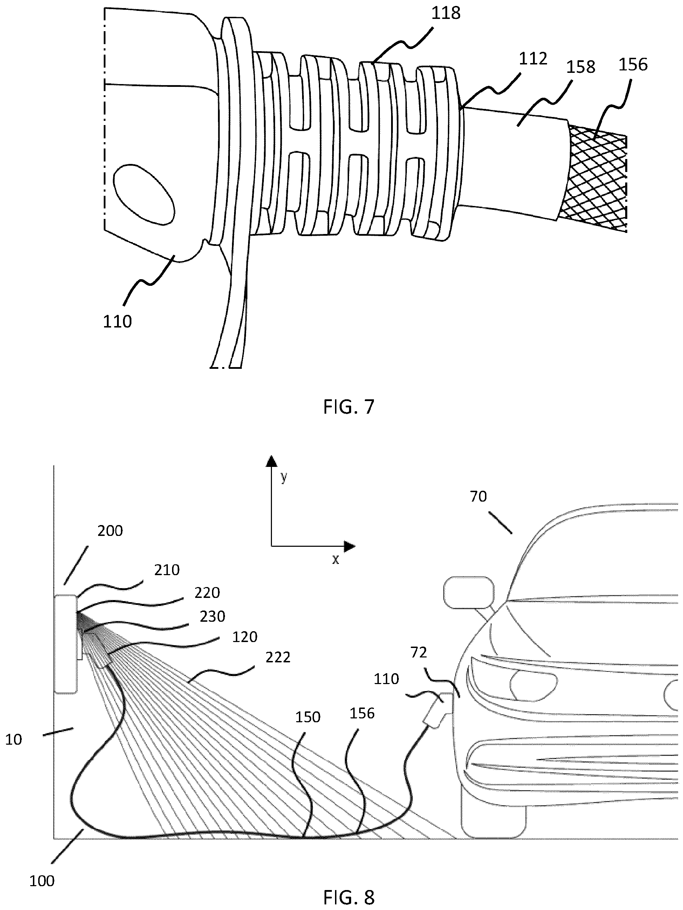

The plug 120 is configured to couple to an electric vehicle charging socket of a charging outlet 230 of an electric vehicle charging station 200, as shown for instance in Fig. 8. In use the charging socket is coupled to a power supply (not shown). Any number of intervening elements could exist between the charging socket and the power supply (including no intervening elements). The power supply could be an electric grid (i.e., a mains supply) or a power generator.

The plug 120 includes a body configured to be handled by a user and a plug connector configured to couple to the charging socket. It is to be appreciated that any suitable type of plug connector 224 could be used, such as an IEC 62196 type 2 connector, an SAE J1772 connector, an SAE J1772 combined charging system (CCS) connector, a SAE J3068 connector, a NACS connector, a CHAdeMO connector, an IEC 62196-3 CCS combo 2 connector, an IEC 62196-3 CCS connector, a GB/T 20234.2 connector, a GB/T 20234.3 connector, an NACS connector, a ChaoJi connector, other proprietary electric vehicle plug connectors, or combinations thereof. In other examples, the plug connector 224 could be an AC mains power plug connector, such as any of IEC TR 60083 World Plug Types A to O. In some examples the plug 120 may include a removable cover 126 for protecting the connector when not in use.

In some examples, the electric vehicle charging cable apparatus 100 might not include a plug 120. In such examples, the electric vehicle charging station 200 does not necessarily require a charging socket, and the second end of the cable 150 is permanently coupled to an outlet of the charging station 200 such that the electric vehicle charging cable apparatus 100 is permanently attached to the electric vehicle charging station 200.

The electric vehicle charging handle 110 includes a body configured to be handled by a user, and a connector 114 configured to couple to a charge port 72 on an electric vehicle 70. It is to be appreciated that any suitable type of connector 114 could be used, such as an IEC 62196 type 2 connector, an SAE J1772 connector, an SAE J1772 combined charging system (CCS) connector, a SAE J3068 connector, a NACS connector, a CHAdeMO connector, an IEC 62196-3 CCS combo 2 connector, an IEC 62196-3 CCS connector, a GB/T 20234.2 connector, a GB/T 20234.3 connector, an NACS connector, a ChaoJi connector, other proprietary electric vehicle plug connectors, or combinations thereof. In some examples, the electric vehicle charging handle 110 includes a removable cover 116 for protecting the connector 114 when not in use.

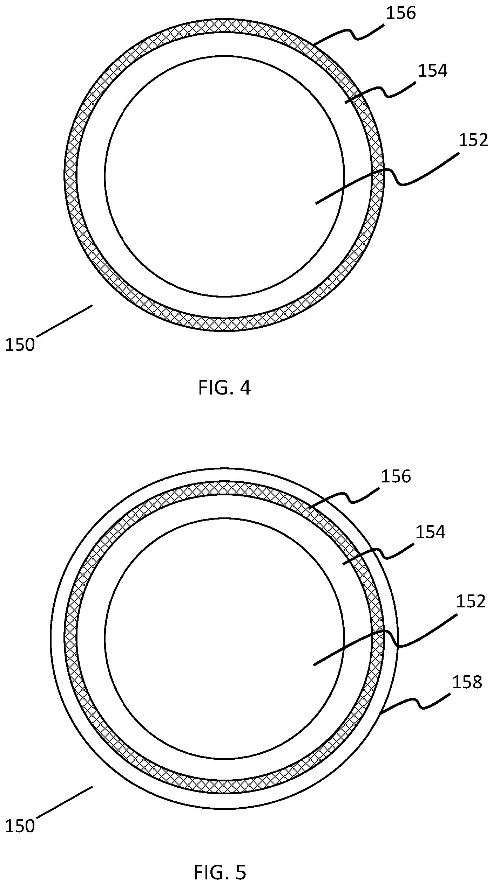

Fig. 4 shows a cross-sectional view at a first point along the length of the cable 150 of the example electric vehicle charging cable apparatus 100. The cable 150 includes an elongate conductive core 152 comprising one or more conductive wires configured to transmit electrical power. The one or more conductive wires may comprise one or more copper wires. The one or more conductive wires may be configured to transmit both electrical power and electrical signals. The conductive core 152 could be described as the first core layer of the cable 150 beneath the insulating jacket 154.

The cable 150 further comprises an elongate insulating jacket 154. The insulating jacket 154 is disposed around the conductive core 152 along at least the majority (i.e., at least half) of the length of the conductive core 152. The insulating jacket 154 may be disposed around the conductive core 152 along substantially all of the length of the conductive core 152. The insulating jacket 154 may coaxially surround the conductive core 152 along at least the majority of the length of the conductive core 152. The insulating jacket 154 may be substantially tubular. The insulating jacket 154 comprises an electrically insulative material, such as an electrically insulative polymeric material. The electrically insulative polymeric material could for instance be a thermoplastic rubber, such as thermoplastic polyurethane. The insulating jacket 154 could be described as the second layer of the cable 150, located around the conductive core 152 and beneath the elongate sleeve 156.

The cable 150 further comprises an elongate sleeve 156. The sleeve 156 is disposed around the insulating jacket 154 along at least the majority (i.e., at least half) of the length of the insulating jacket 154. The sleeve 156 may be disposed around the insulating jacket 154 along substantially all of the length of the insulating jacket 154. The sleeve 156 may coaxially surround the insulating jacket 154 along at least the majority of the length of the insulating jacket 154. The elongate sleeve 156 may be substantially tubular. The sleeve 156 could be described as the third layer of the cable 150, located around the insulating jacket 154. The sleeve 156 may form the outer layer of the cable 150 (and therefore provide the outer surface of the cable 150) along the majority of the length of the cable 150, as shown for instance in Figs. 1 & 2. The majority of the area of the outer surface of the cable 150 may be provided by the elongate sleeve 156.

The sleeve 156 comprises a plurality of openings, the openings extending at least partially through the sleeve 156. The openings may be provided in the outer surface of the sleeve 156. In other words, the sleeve 156 may comprise a plurality of surface interruptions along its length. For example, the sleeve 156 may comprise a plurality of recesses in its outer surface and/or through holes extending through the material of the sleeve 156. The plurality of openings may be spaced along the length of the sleeve 156. The plurality of openings may be regularly spaced along the length of the sleeve 156. The plurality of openings may be spaced along substantially the whole length of the sleeve 156. The plurality of openings make the cable 150 less slippery.

In the example electric vehicle charging cable apparatus 100, the elongate sleeve 156 is substantially tubular. The material from which the elongate sleeve 156 is made may be flexible to readily allow the elongate sleeve 156 to be located over the insulating jacket 154. The material from which the elongate sleeve 156 is made may be resilient and thus the diameter of the elongate sleeve 156 may be expandable. The elongate sleeve 156 may have a diameter of from 8 mm to 16 mm, such as 12 mm, in its unexpanded state.

In some examples, the elongate sleeve 156 is made from a braided material. Braided material comprises a plurality of recesses in the surface of the braided material and/or holes extending through the braided material, depending on the braid density. The braided material is shown for instance in the magnified view of Fig. 3. In other examples the elongate sleeve 156 may be made from a meshed material. Meshed material comprises a plurality of regularly spaced holes through the meshed material.

The elongate sleeve 156 may comprise a fibrous material, such as a fibrous polymeric material. The elongate sleeve 156 of the example electric vehicle charging cable apparatus 100 is made from braided polyester fibres. In other examples different synthetic polymeric fibres could be used, such as polypropylene, nylon, polyethylene, aramid, or acrylic fibres. Alternatively or additionally, natural or naturally derived fibres could be used, such as hemp, bamboo, linen, cotton, coir, jute, straw, or sisal fibres.

In some examples, the insulating jacket 154 is of a first colour and the sleeve 156 is of a second colour, the second colour being different to the first colour. The second colour may contrast with the first colour, for example with a colour-difference parameter ΔE from the CIEDE2000 formula of greater than 3 or greater than 5. Where the sleeve 156 comprises a plurality of through holes, the contrasting colours of the sleeve 156 and the underlying insulating jacket 154 can alert a user to the presence of the cable 150, and minimize the risk of tripping.

In some examples, the sleeve 156 is configured to emit visible light when exposed to UV light. The sleeve 156 may comprise a photoluminescent material, which could be a fluorescent material or a phosphorescent material. The sleeve 156 may comprise a fluorescent material, such as fluorescein, rhodamine, or cyanine. A portion of the sleeve 156 or all of the sleeve 156 may be doped with a photoluminescent additive (i.e., a photoluminescent additive is mixed into the material forming the sleeve 156). The photoluminescent additive could be a fluorescent additive. A portion of the sleeve 156 or all of the sleeve 156 may comprise a photoluminescent material, such as a fluorescent material. For instance, the sleeve 156 could comprise a photoluminescent polymer (such as a fluorescent polymer), or the sleeve 156 could comprise a polymer (such as PVC) doped with a photoluminescent additive (such as a fluorescent additive). In such examples, when a UV light source is turned on, this causes the sleeve 156 to emit visible light, thereby alerting any persons nearby to the presence of the cable 150, thereby reducing the trip hazard presented by the cable 150. The sleeve 156 can also help a user of the electric vehicle charging cable apparatus 100 to locate the electric vehicle charging cable apparatus 100.

The elongate conductive core 152, the elongate insulating jacket 152 and the elongate sleeve 156 are coaxial with one another in the example electric vehicle charging cable apparatus 100. Furthermore, the conductive core 152, the insulating jacket 152 and the sleeve 156 are flexible in the example electric vehicle charging cable apparatus 100.

As shown best in Figs. 5, 6 and 7, the cable 150 further comprises an impermeable cover 158 disposed around the sleeve 156 along a portion of the length of the sleeve 156. The portion of the length of the sleeve 156 around which the impermeable cover 158 is disposed is less than half (i.e., a minority) of the length of the sleeve 156 in the example electric vehicle charging cable apparatus 100. The portion of the length of the sleeve 156 around which the impermeable cover 158 is disposed may be less than 25%, less than 10% or less than 5% of the length of the sleeve 156. The impermeable cover 158 may coaxially surround the sleeve 156 along the portion of the length of the sleeve 156. The impermeable cover 158 may be up to 20 cm in length, such as 1 cm to 20 cm in length, or 2 cm to 10cm in length.

In the example electric vehicle charging cable apparatus 100, the impermeable cover 158 is elongate and substantially tubular in shape. The impermeable cover 158 is coaxial with the conductive core 152, the insulating jacket 152 and the sleeve 156 in the example electric vehicle charging cable apparatus 100.

In the example electric vehicle charging cable apparatus 100, the cable 150 comprises a further impermeable cover 159. The further impermeable cover 159 is substantially the same as the impermeable cover 158, but extends through the cable inlet (not shown) of the plug 120, rather than the cable inlet 112 of the electric vehicle charging handle 110.

Fig. 5 shows a cross section through the portion of cable 150 comprising the impermeable cover 158. Along the portion of the length of the sleeve 156 around which the impermeable cover 158 is disposed, the impermeable cover 158 could be described as a fourth layer of the cable 150, located around the sleeve 156. The inner surface of the impermeable cover 158 may be in contact with the outer surface of the sleeve 156. Along the portion of the length of the sleeve 156 around which the impermeable cover 158 is disposed, the impermeable cover 158 may form the outer layer of the cable 150 (and therefore provide the outer surface of the cable 150). Less than half of the area of the outer surface of the cable 150 may be provided by the impermeable cover 158. Less than 25%, less than 10% or less than 5% of the of the area of the outer surface of the cable 150 may be provided by the impermeable cover 158.

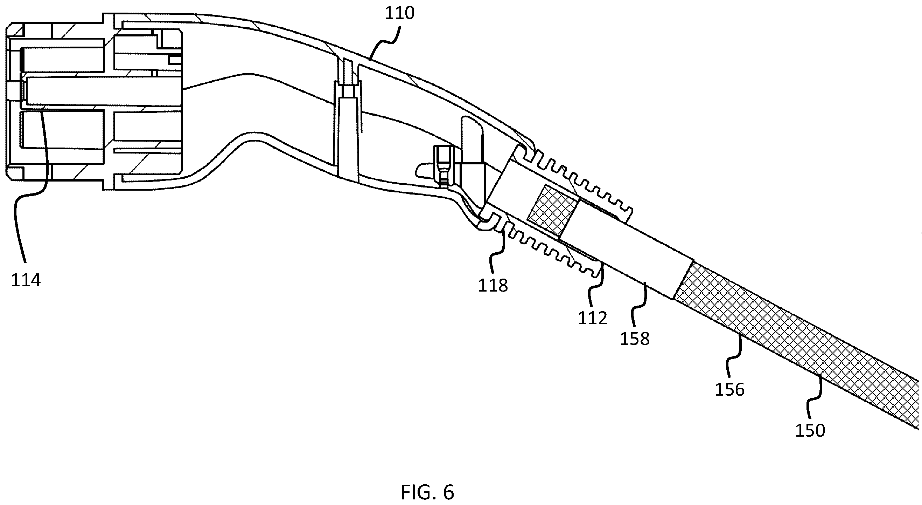

As shown best in Fig. 6, the portion of the length of the sleeve 156 around which the impermeable cover 158 is disposed is the portion of the sleeve 156 located in the cable inlet 112 of the electric vehicle charging handle 110. In other words, the portion of the length of the sleeve 156 surrounded by the impermeable cover 158 extends through the cable inlet 112. The cable inlet 112 of the charging handle 110 may comprise an opening configured to locate the cable 150. The opening of the cable inlet 112 may comprise a wall comprising an elastomeric material, in order to provide a seal between the cable 150 and the charging handle 110, thereby preventing water ingress into the interior of the electric vehicle charging handle 110. The cable inlet 112 is located in a gland 118 of the charger handle. The gland 118 may be made from an elastomeric material. The gland 118 may comprise a plurality of ribs to facilitate relief of strain when the handle 110 is manipulated by a user.

In some examples, the impermeable cover 158 comprises a heat-shrink material, such as a polyolefin material. The heat-shrink material may be a cross-linked polyolefin material, such as cross-linked polyethylene. In other examples, the heat-shrink material could for example comprise polyvinyl chloride, a fluoropolymer such as PTFE, and/or a silicone rubber heat-shrink material.

It has been surprisingly found that the example electric vehicle charging cable apparatus 100 comprising the sleeve 156 with plurality of openings along its length and the impermeable cover 158 can achieve the same ingress protection (IP) rating as an electric vehicle charging handle 110 without the sleeve 156 and the impermeable cover 158 (i.e., where the insulating jacket 154 forms the outer layer of the cable). It has therefore been surprisingly found that the benefits of sleeve 156 with plurality of openings can be achieved (improved visibility and improved grip) without a corresponding loss in ingress protection (IP) rating and without requiring a specialized gasket or silicone sealant.

In some examples, the impermeable cover 158 is configured to clamp the sleeve 156 against the insulating jacket 154, to secure the sleeve 156 in position. In such examples, the impermeable cover 158 could be described as an impermeable collar 158. In such examples, substantially no adhesive may be provided between the sleeve 156 and the insulating jacket 154.

Fig. 8 illustrates an example electric vehicle charging system 10 and an electric vehicle 70. The example charging system 10 comprises an example electric vehicle charging station 200 and the example electric vehicle charging cable apparatus 100.

The charging outlet 230 is configured to couple to an electric vehicle charging cable apparatus, such as the example electric vehicle charging cable apparatus 100. In some examples, the electric vehicle charging station 200 may comprise more than one charging outlet 230. The charging outlet 230 may be configured to provide an AC or a DC power supply.

In some examples, the charging outlet 230 is configured to removably couple to an electric vehicle charging plug of an electric vehicle charging cable. The charging outlet 230 may include a charging socket (not shown) configured to couple to an electric vehicle charging plug of an electric vehicle charging cable. The charging socket may be configured to couple to any suitable type of electric vehicle charging plug. For instance, the charging socket could be configured to couple to an IEC 62196 type 2 plug, an SAE J1772 plug, an SAE J1772 combined charging system (CCS) plug, a SAE J3068 plug, a NACS plug, a CHAdeMO plug, an IEC 62196-3 CCS combo 2 plug, an IEC 62196-3 CCS plug, a GB/T 20234.2 plug, a GB/T 20234.3 plug, an NACS plug, a ChaoJi plug, other proprietary electric vehicle plugs, or combinations thereof. The charging socket could alternatively be configured to couple to an AC mains power plug, such as any of IEC TR 60083 World Plug Types A to O.

In other examples, the charging outlet 230 could be configured to permanently couple to an electric vehicle charging cable, so that the electric vehicle charging cable is permanently attached to the charging outlet 230 and the electric vehicle charging station 200.

In some examples, the electric vehicle charging station 200 comprises charge circuitry (not shown). The charging outlet 230 may be coupled to the charge circuitry. The charge circuitry is configured to manage the power supplied to an electric vehicle via the electric vehicle charging cable apparatus 100.

The charging outlet 230 is configured to couple to a power supply. Any number of intervening elements could exist between the charging outlet 230 and the power supply (including no intervening elements), such as the charge circuitry. The power supply could be an electric grid (i.e., a mains power supply) or a power generator.

The example electric vehicle charging station 200 further includes a UV light source 220. The UV light source 220 is configured to illuminate the electric vehicle charging cable apparatus 100. The UV beam produced by the UV light source is labelled 222 in Fig. 8. In this example, the UV light source 220 comprises a UV light emitting diode (LED).

One or more UV light source(s) 220 may be provided. The UV light source(s) 220 may comprise any suitable UV light source for emitting UV light. Ultraviolet light is considered as electromagnetic radiation with a wavelength of from 10 nm to 400 nm. The UV light source(s) 220 may comprise a UV light emitting diode (LED) or a UV lamp. The light emitted by the one or more UV light sources 220 may have a wavelength of 100 nm to 400 nm. The light emitted by the one or more UV light sources 220 may have a wavelength of 300 nm to 400 nm.

The UV light source(s) 220 may comprise a light source wherein the majority of the light emitted from the light source is UV light (as determined by spectral radiant flux measurements using a spectroradiometer). For example, the UV light source(s) 220 may predominately emit UV light but may also emit some light in other ranges. For example, the UV light source(s) 220 could also emit a small amount of visible light.

In examples where the UV light source(s) 220 emit light outside the UV range the UV light source(s) 220 may comprise a filter configured to block, or at least partially block, the light outside of the UV range. For example, if the UV light source(s) 220 also emit some visible light the filter can be configured to block, or at least partially block, the visible light. Blocking unwanted light, such as visible light, can prevent the UV light source(s) 220 emitting visible light to the indicator(s). Emitting visible light (i.e., in addition to UV light) to an indicator may reduce the visibility of the indicator in comparison to UV light source(s) 220 emitting only UV light and would therefore be undesirable.

The filter may be configured to filter the majority of the visible light or other light outside of the UV range. The filter may be a band-pass filter, optical filter or any other suitable type of filter.

The UV light source(s) 220 may be powered by an electrical grid (i.e., a mains power supply) or a power generator. Any number of intervening elements could exist between the UV light source(s) 220 and the electrical grid, such as an AC to DC converter. Alternatively, the UV light source(s) 220 could be powered by one or more batteries.

In this example, the UV light source 220 is configured to direct the UV light emitted therefrom towards the electric vehicle charging cable apparatus 100. The UV light source 220 is configured to direct the UV light emitted therefrom at least partially in a downward direction. The downward direction is the direction from the example electric vehicle charging station 200 towards the ground. Preferably, the UV light source 220 is configured to direct substantially all of the UV light emitted therefrom at least partially in a downward direction. In other words, the UV light source 220 is configured to direct substantially none of the UV light emitted therefrom at least partially in an upward direction. This is illustrated in Fig. 8 by the UV light beam 222, where the beam 222 is shown extending in a direction partially laterally from the light source and partially downwardly towards the ground. The downward direction is opposite to the y arrow shown in Fig. 8. Directing the UV light in a generally downward direction avoids directing UV light towards the face of any persons nearby. Furthermore, the light is directed towards any indicator(s) on the ground to alert any passersby to a potential hazard.

When activated, the one or more UV light sources 220 could emit a continuous beam of UV light or a sequence of UV light pulses. The UV light source(s) 220 may be configured to emit pulses of UV light at any suitable frequency to which subsequent visible light would be visible to a user. In other words, a user seeing the sleeve 156 of the electric vehicle charging cable apparatus 100 emitting visible light in response to receiving at least part of the sequence of UV light pulse would be able to see the sleeve 156 flashing rather than continuously emitting visible light.

The frequency of the sequence of UV pulses may be less than or equal to 60 hertz. The frequency of the sequence of UV pulses may be less than or equal to 50 hertz. The frequency of the sequence of UV pulses may be less than or equal to 20 hertz. The frequency of the sequence of UV pulses may be less than or equal to 5 hertz. The frequency of the sequence of UV pulses may be less than or equal to 2 hertz. The frequency of the sequence of UV pulses may be less than or equal to 1 hertz. The frequency of the sequence of UV pulses may be less than or equal to 0.5 hertz. The frequency of the sequence of UV pulses may be less than or equal to 0.1 hertz.

The UV light source(s) 220 emitting a sequence of UV pulses at a frequency of 1 hertz may emit one UV pulse per second. The UV light source(s) 220 emitting a sequence of UV pulses at a frequency of 2 hertz may emit two UV pulses per second.

In this example, the electric vehicle charging station 200 includes a housing 210. The housing 210 comprises the charging outlet 230. The UV light source 220 is located within the housing 210 or on the housing 210.

The housing 210 may be made from a plastics material or metal. In some examples, the housing 210 may house electronic equipment such as a connector configured to couple to a power supply (the power supply could be an electric grid or a generator), a circuit breaker, a transformer, an AC to DC converter, and/or charge circuitry for controlling the power supplied to the electric vehicle. The housing 210 may be mounted to a wall or a support. The housing 210 could be mounted to a wall or a support using one or more fasteners such as screws.

In the example of Fig. 8, the housing 210 has a front face and rear face (not shown). In this example, the UV light source 220 and the charging outlet 230 are provided on the front face of the housing 210. The front face could also include a display to indicate the charging status. The rear face may include a mounting portion for attaching the housing to a wall or support. The mounting portion may be attached to a mounting bracket on the wall or support using one or more fasteners such as screws.

The following method can be carried out to produce the example electric vehicle charging cable apparatus 100 described herein.

An inner cable is provided, the inner cable comprising the elongate insulating jacket 154 disposed around the conductive core 152 of the cable along at least the majority of the length of the conductive core, as described previously. The elongate sleeve 156 described herein is drawn over the elongate insulating jacket 154 of the inner cable such that the elongate sleeve 156 is disposed around the insulating jacket 154 along at least the majority of the length of the insulating jacket 154.

The impermeable cover 158 is located over a portion of the length of the sleeve 156. The impermeable cover 158 may be substantially tubular.

The size of the impermeable cover 158 is then reduced such that the impermeable cover covers the sleeve 156 along the portion of the length of the sleeve 156. Where the impermeable cover 158 is tubular, the diameter of the impermeable cover 158 is reduced in this step. The inner surface of the impermeable cover 158 may be in contact with the outer surface of the sleeve 156 once the impermeable cover 158 has been reduced in size. The impermeable cover 158 may be configured to shrink from an expanded state to a shrunken state. The impermeable cover 158 may be substantially tubular and be configured to shrink to reduce the diameter of the impermeable cover 158 by at least 50 %. For instance, the impermeable cover 158 may have a diameter of substantially 24 mm in an expanded state and be configured to shrink down to a diameter of 8 mm in the shrunken state.

The impermeable cover comprises a heat-shrink material in this example method, so the reducing in size of the impermeable cover 158 comprises heating the impermeable cover 158. In other examples, the impermeable cover 158 could be a cold-shrink material, wherein the impermeable cover 158 is reduced in size via elastic recovery.

The end of the cable 150 comprising the impermeable cover 158 is then located into the cable inlet 112 of the electric vehicle charging handle 110. In particular, the portion of the length of the sleeve 156 covered by the impermeable cover 158 is located within the cable inlet 112.

There is thus described an electric vehicle charging cable apparatus, system, and method with a number of advantages as described above and below. Safety around the electric vehicle charging cable is improved by increasing the visibility of the cable. The cable apparatus is less slippery when wet and more tactile. The electric vehicle charging cable apparatus has been found to maintain high ingress protection ratings. The manufacture of the electric vehicle charging cable apparatus is straightforward.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims. For instance, different materials could be used. Cold-shrink tubing could be used instead of heat-shrink tubing.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

As used herein, the terms "the at least one" and "the one or more" mean "any one of the at least one" and "any one of the one or more" respectively.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An electric vehicle charging cable apparatus, the cable apparatus comprising:
an electric vehicle charging handle comprising a cable inlet; and
a cable, the cable comprising:
an elongate conductive core comprising one or more conductive wires configured to transmit electrical power;
an elongate insulating jacket, wherein the insulating jacket is disposed around the conductive core along at least the majority of the length of the conductive core, the insulating jacket comprising an electrically insulative material;
an elongate sleeve, wherein the sleeve is disposed around the insulating jacket along at least the majority of the length of the insulating jacket, the sleeve comprising a plurality of openings; and
an impermeable cover, wherein the impermeable cover is disposed around the sleeve along a portion of the length of the sleeve, the impermeable cover extending through the cable inlet.

2. The electric vehicle charging cable apparatus of any of the preceding claims, wherein the impermeable cover is disposed around the sleeve along less than half of the length of the sleeve.

3. The electric vehicle charging cable apparatus of any of the preceding claims, wherein the impermeable cover is substantially tubular.

4. The electric vehicle charging cable apparatus of any of the preceding claims, wherein the impermeable cover is up to 20 cm in length.

5. The electric vehicle charging cable apparatus of any of the preceding claims, wherein the impermeable cover comprises a heat-shrink material, and wherein optionally the heat-shrink material comprises a polyolefin material.

6. The electric vehicle charging cable apparatus of any of the preceding claims, wherein the sleeve comprises a braided material.

7. The electric vehicle charging cable apparatus of any of claims 1 to 5, wherein the sleeve comprises a meshed material.

8. The electric vehicle charging cable apparatus of any of the preceding claims, wherein the plurality of openings comprises a plurality of through holes through the material of the sleeve.

9. The electric vehicle charging cable apparatus of claim 8, wherein the insulating jacket is of a first colour and the sleeve is of a second colour, the second colour being different to the first colour.

10. The electric vehicle charging cable apparatus of any of the preceding claims, wherein the sleeve comprises a material configured to emit visible light in response to absorbing UV light, and wherein optionally the sleeve comprises a fluorescent material.

11. The electric vehicle charging cable apparatus of any of the preceding claims, wherein the sleeve comprises a fibrous material, and wherein optionally the sleeve comprises a fibrous polymeric material, and wherein optionally the fibrous polymeric material comprises polyester.

12. An electric vehicle charging system comprising:
the electric vehicle charging cable apparatus of any of the preceding claims; and
an electric vehicle charging station comprising a charging outlet, the charging outlet being configured to couple to the electric vehicle charging cable apparatus.

13. The electric vehicle charging system of claim 12 when dependent on claim 10, wherein the electric vehicle charging system further comprises one or more ultraviolet (UV) light sources configured to illuminate the electric vehicle charging cable apparatus, and wherein optionally the one or more UV light sources are configured to emit a sequence of UV light pulses, and wherein optionally the one or more UV light sources comprise a UV light emitting diode (LED) and/or a UV lamp.

14. A method of producing an electric vehicle charging cable apparatus, the method comprising:
drawing an elongate sleeve over an elongate insulating jacket of a cable such that the sleeve is disposed around the insulating jacket along at least the majority of the length of the insulating jacket, the insulating jacket being disposed around a conductive core of the cable along at least the majority of the length of the conductive core, wherein the sleeve comprises a plurality of openings along its length and wherein the insulating jacket comprises an electrically insulative material;
locating an impermeable cover over a portion of the length of the sleeve, the impermeable cover comprising a heat-shrink material;
reducing the size of the impermeable cover such that the impermeable cover covers the sleeve along the portion of the length of the sleeve; and
locating an end of the cable comprising the impermeable cover into a cable inlet of an electric vehicle charging handle.

15. A method according to claim 14, wherein the impermeable cover comprises a heat-shrink material, and the reducing the size of the impermeable cover comprises heating the impermeable cover.

## Amended claims

### Amended claims in accordance with Rule 137(2) EPC.

1. An electric vehicle charging cable apparatus (100), the cable apparatus (100) comprising:
an electric vehicle charging handle (110) comprising a cable inlet (112); and
a cable (150), the cable (150) comprising:
an elongate conductive core (152) comprising one or more conductive wires configured to transmit electrical power;
an elongate insulating jacket (154), wherein the insulating jacket (154) is disposed around the conductive core (152) along at least the majority of the length of the conductive core (152), the insulating jacket (154) comprising an electrically insulative material;
an elongate sleeve (156), wherein the sleeve (156) is disposed around the insulating jacket (154) along at least the majority of the length of the insulating jacket (154), the sleeve (156) comprising a plurality of openings; and
an impermeable cover (158), wherein the impermeable cover (158) is disposed around the sleeve (156) along a portion of the length of the sleeve (156), the impermeable cover (158) extending through the cable inlet (112).

2. The electric vehicle charging cable apparatus (100) of claim 1, wherein the impermeable cover (158) is configured to clamp the sleeve (156) against the insulating jacket (154), to secure the sleeve (156) in position.

3. The electric vehicle charging cable apparatus (100) of claim 2, wherein substantially no adhesive is provided between the sleeve (156) and the insulating jacket (154).

4. The electric vehicle charging cable apparatus (100) of any of the preceding claims, wherein the electric vehicle charging cable apparatus (100) further comprises a plug (120), the first end of the cable (150) being coupled to the electric vehicle charging handle (110) and the second end of the cable (150) being coupled to the plug (120), and wherein the cable (150) comprises a further impermeable cover, the further impermeable cover being disposed around the sleeve (156) along a portion of the length of the sleeve (156), the further impermeable cover extending through a cable inlet of the plug (120).

5. The electric vehicle charging cable apparatus (100) of any of the preceding claims, wherein the electric vehicle charging handle (110) comprises a connector (114) configured to couple to a charge port on an electric vehicle, the connector comprising at least one of: an IEC 62196 type 2 connector, an SAE J1772 connector, an SAE J1772 combined charging system (CCS) connector, a SAE J3068 connector, a NACS connector, a CHAdeMO connector, an IEC 62196-3 CCS combo 2 connector, an IEC 62196-3 CCS connector, a GB/T 20234.2 connector, a GB/T 20234.3 connector, an NACS connector, or a ChaoJi connector.

6. The electric vehicle charging cable apparatus (100) of any of the preceding claims, wherein the impermeable cover (158) is disposed around the sleeve (156) along less than half of the length of the sleeve (156).

7. The electric vehicle charging cable apparatus (100) of any of the preceding claims, wherein the impermeable cover (158) is substantially tubular.

8. The electric vehicle charging cable apparatus (100) of any of the preceding claims, wherein the impermeable cover (158) comprises a heat-shrink material, and wherein optionally the heat-shrink material comprises a polyolefin material.

9. The electric vehicle charging cable apparatus (100) of any of the preceding claims, wherein the plurality of openings comprises a plurality of through holes through the material of the sleeve (156).

10. The electric vehicle charging cable apparatus (100) of claim 9, wherein the insulating jacket (154) is of a first colour and the sleeve (156) is of a second colour, the second colour being different to the first colour.

11. The electric vehicle charging cable apparatus (100) of any of the preceding claims, wherein the sleeve (156) comprises a material configured to emit visible light in response to absorbing UV light, and wherein optionally the sleeve (156) comprises a fluorescent material.

12. The electric vehicle charging cable apparatus (100) of any of the preceding claims, wherein the sleeve (156) comprises a fibrous polymeric material, and wherein optionally the fibrous polymeric material comprises polyester.

13. An electric vehicle charging system (10) comprising:
the electric vehicle charging cable apparatus (100) of any of the preceding claims; and
an electric vehicle charging station (200) comprising a charging outlet, the charging outlet (230) being configured to couple to the electric vehicle charging cable apparatus (100).

14. The electric vehicle charging system (10) of claim 13 when dependent on claim 11, wherein the electric vehicle charging system (10) further comprises one or more ultraviolet (UV) light sources (220) configured to illuminate the electric vehicle charging cable apparatus (100), and wherein optionally the one or more UV light sources (220) are configured to emit a sequence of UV light pulses, and wherein optionally the one or more UV light sources (220) comprise a UV light emitting diode (LED) and/or a UV lamp.

15. A method of producing an electric vehicle charging cable apparatus (100), the method comprising:
drawing an elongate sleeve (156) over an elongate insulating jacket (154) of a cable (150) such that the sleeve (156) is disposed around the insulating jacket (154) along at least the majority of the length of the insulating jacket (154), the insulating jacket (154) being disposed around a conductive core (152) of the cable (150) along at least the majority of the length of the conductive core (152), wherein the sleeve (156) comprises a plurality of openings along its length and wherein the insulating jacket (154) comprises an electrically insulative material;
locating an impermeable cover (158) over a portion of the length of the sleeve (156), the impermeable cover (158) comprising a heat-shrink material;
reducing the size of the impermeable cover (158) such that the impermeable cover (158) covers the sleeve (156) along the portion of the length of the sleeve (156); and
locating an end of the cable (150) comprising the impermeable cover (158) into a cable inlet (112) of an electric vehicle charging handle (110).
